(19) **Europäisches Patentamt / European Patent Office / Office européen des brevets**

(11) **EP 4 610 778 A1**

(12) **EUROPÄISCHE PATENTANMELDUNG**

(43) Veröffentlichungstag:
**03.09.2025   Patentblatt 2025/36**

(21) Anmeldenummer: **24160531.0**

(22) Anmeldetag: **29.02.2024**

(51) Internationale Patentklassifikation (IPC):
**G06F 1/26** *(2006.01)*     **G06F 9/50** *(2006.01)*

(52) Gemeinsame Patentklassifikation (CPC):
**G06F 1/26; G06F 9/5094**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Schütz, Thomas**
  **90765 Fürth (DE)**

• **Amthor, Arvid**
  **98631 Grabfeld OT Nordheim (DE)**
• **Schreck, Sebastian**
  **90429 Nürnberg (DE)**
• **Sudhoff, Robin**
  **91052 Erlangen (DE)**
• **Zupan, Nejc**
  **80337 München (DE)**

(74) Vertreter: **Siemens Patent Attorneys**
**Postfach 22 16 34**
**80506 München (DE)**

(54) **STEUERUNG VON LEISTUNGSTRANSFERS ZWISCHEN MEHREREN RECHENZENTREN**

(57)    Es wird ein Verfahren zur Steuerung von Leistungstransfers (42) zwischen mehreren Rechenzentren $i \in I$ (2) innerhalb eines festgelegten Zeitbereiches mittels einer Steuervorrichtung (4) vorgeschlagen, wobei jedes Rechenzentren (2) seine Leistungsaufnahme in dem Zeitbereich um eine Flexibilitätsleistung $P_i^+$ erhöhen oder $P_i^-$ verringern kann. Das Verfahren ist gekennzeichnet durch folgende Schritte:

- (S1) Übermitteln von mit den jeweiligen Flexibilitätsleistungen assoziierte maximale Flexibilitätsleistungen $P_i^{+,max}, P_i^{-,max}$ an die Steuervorrichtung (4) durch jedes der Rechenzentren (2) für den genannten Zeitbereich;

- (S2) Bereitstellen einer Zielfunktion, die die Flexibilitätsleistung $P_i^+, P_i^-$ als Variablen umfasst;

- (S3) Ermitteln der Werte der Flexibilitätsleistungen $P_i^+, P_i^-$ mittels einem Extremalisieren der Zielfunktion durch die Steuervorrichtung (4); wobei

- beim Extremalisieren die erste Nebenbedingung berücksichtigt wird, dass die Summe aus einem der Rechenzentren (2) zugeführten $P_{n \to i}$ und abgeführten Leistungen $P_{i \to j}$ entweder gleich $P_i^+ \leq P_i^{+,max}$ oder gleich $-P_i^- \geq -P_i^{+,max}$ ist; und

- (S4) Steuern der Leistungstransfers zwischen den Rechenzentren (2) gemäß der ermittelten Flexibilitätsleistungen $P_i^+, P_i^-$ mittels der Steuervorrichtung (4).

Weiterhin betrifft die Erfindung ein Steuervorrichtung (4) sowie ein Rechenzentrensystem (1).

FIG 2

**Beschreibung**

Die Erfindung betrifft ein Verfahren gemäß dem Oberbegriff des Patentanspruches 1, eine Steuervorrichtung gemäß dem Oberbegriff des Patentanspruches 10 sowie ein Rechenzentrensystem gemäß dem Oberbegriff des Patentanspruches 11.

Rechenzentren (englisch: Datacenter) sind eine der größten Stromverbraucher und es wird erwartet, dass die Arbeitsbelastung der Rechenzentren in den kommenden Jahren weiter zunehmen wird. Der Leistungsbedarf von typischen Rechenzentren kann 100 MW übersteigen. Daher sind Rechenzentren typischerweise eine der größten Anschlusslasten innerhalb von Stromnetzen.

Rechenzentren haben zudem hohe Verfügbarkeitsanforderungen und verfügen daher in der Regel über ein redundantes Energiesystem, um Netzausfälle zu bewältigen. Der Hauptstromverbrauch in einem Rechenzentrum entsteht durch die Rechenaufgaben (englisch: Jobs) und den Betrieb der erforderlichen Serverkühlung. Hierbei können mehrere Systemkomponenten eines Rechenzentrums, wie beispielsweise Backup-Energiesystem, HVAC-System und Computerarbeitsplätze, innerhalb bestimmter Grenzen flexibel betrieben werden. Weiterhin sind die Rechenaufträge typischerweise flexibel bezüglich des Ortes, an dem sie ausgeführt werden. Zudem arbeiten Rechenzentren typischerweise selten unter Volllast, sodass diese grundsätzlich Leistungsreserven aufweisen.

Mit dem zunehmenden Einsatz von erneuerbaren Energiequellen, wie beispielsweise Solarenergie und Windenergie, wird die Stromeinspeisung in das elektrische Netz immer variabler und volatiler. Dadurch ergeben sich zusätzliche Herausforderungen für das Stromnetz. Um erneuerbare Energiequellen in das Netz zu integrieren, die Netzstabilität zu verbessern und gleichzeitig die Kohlenstoffemissionen zu reduzieren, ist Flexibilität erforderlich.

Der vorliegenden Erfindung liegt die Aufgabe zugrunde, die Flexibilität von Rechenzentren verbessert zu nutzen.

Die Aufgabe wird durch ein Verfahren mit den Merkmalen des unabhängigen Patentanspruches 1, durch eine Steuervorrichtung mit den Merkmalen des unabhängigen Patentanspruches 10 sowie durch ein Rechenzentrensystem mit den Merkmalen des unabhängigen Patentanspruches 11 gelöst. In den abhängigen Patentansprüchen sind vorteilhafte Ausgestaltungen und Weiterbildungen der Erfindung angegeben.

Das erfindungsgemäße Verfahren zur Steuerung von Leistungstransfers zwischen mehreren Rechenzentren $i \in I = \{1, \ldots, N\}$ innerhalb eines festgelegten Zeitbereiches mittels einer Steuervorrichtung, wobei jedes der Rechenzentren seine Leistungsaufnahme in dem Zeitbereich um eine Flexibilitätsleistung $P_i^+$ erhöhen oder $P_i^-$ verringern kann, ist gekennzeichnet durch wenigstens die folgenden Schritte:

- Übermitteln von mit den jeweiligen Flexibilitätsleistungen assoziierte maximale Flexibilitätsleistungen $P_i^{+,\max}, P_i^{-,\max}$ an die Steuervorrichtung durch jedes der Rechenzentren für den genannten Zeitbereich;

- Bereitstellen einer Zielfunktion, die die Flexibilitätsleistung $P_i^+, P_i^-$ als Variablen umfasst;

- Ermitteln der Werte der Flexibilitätsleistungen $P_i^+, P_i^-$ mittels einem Extremalisieren der Zielfunktion durch die Steuervorrichtung; wobei

- beim Extremalisieren die erste Nebenbedingung berücksichtigt wird, dass die Summe aus einem der Rechenzentren zugeführten $P_{n \to i}$ und abgeführten Leistungen $P_{i \to j}$ entweder gleich $P_i^+ \leq P_i^{+,\max}$ oder gleich $-P_i^- \geq -P_i^{-,\max}$ ist; und

- Steuern der Leistungstransfers zwischen den Rechenzentren gemäß der ermittelten Flexibilitätsleistungen $P_i^+, P_i^-$ mittels der Steuervorrichtung.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

Mit einem Leistungstransfer beziehungsweise einem Leistungsaustausch innerhalb eines Zeitbereiches ist ein Energieaustausch assoziiert, sodass vorliegend ein Leistungsaustausch und ein Energieaustausch als äquivalent angesehen werden.

Die Steuervorrichtung ist bezüglich der Rechenzentren als zentrale Steuervorrichtung ausgebildet. Die Steuervorrichtung kann für das Ermitteln der Flexibilitätsleistungen, das heißt für die Durchführung der Extremalisierung der Zielfunktion (Optimierung), eine Recheneinheit umfassen. Die Steuervorrichtung kann weiterhin cloudbasiert, beispielsweise als Server, ausgebildet sein.

Eine Optimierung im Sinne der vorliegenden Erfindung ist ein Verfahren zur Minimierung oder Maximierung (Extremalisierung) einer Zielfunktion. Die Minimierung beziehungsweise Maximierung der Zielfunktion erfolgt typischerweise numerisch. Die Zielfunktion charakterisiert hierbei eine Eigenschaft oder eine Größe des Systems, beispielsweise die Kohlenstoffdioxidemissionen oder die Betriebskosten der Rechenzentren. Die Zielfunktion weist Parameter und Variablen auf. Das Ergebnis der Optimierung sind die Werte der Variablen der Zielfunktion. Die Parameter sind fest und parametrisieren die für das System spezifische Zielfunktion. Typischerweise wird kein exaktes Minimum oder Maximum der Zielfunktion erreicht, sondern es ist ausreichend diesem, beispielsweise durch ein Festlegen eines Schwellenwertes, ausreichend nahe zu kommen. Weiterhin erfolgt die Optimierung typischerweise unter einer Berücksichtigung mehrerer Nebenbedingungen.

Nebenbedingungen, Randbedingungen oder Zwangsbedingungen - hier zusammenfassend als Nebenbedingungen bezeichnet - sind Bedingungen, Eigenschaften und/oder Relationen, die die Parameter und/oder Variablen des Optimierungsverfahrens (Optimierung) erfüllen müssen. Diese können als Gleichung und/oder Ungleichung gegeben sein, und/oder explizit eine Menge von zulässigen Werten der Parameter und/oder zulässigen Werten der Variablen beschreiben.

Der Leistungstransfer von einem der Rechenzentren zu einem weiteren der Rechenzentren ist äquivalent zu einem Transfer von Rechenarbeiten (englisch: Jobs, queued jobs).

Gemäß der Erfindung ist jedes der Rechenzentren dazu ausgebildet, seine Leistungsaufnahme, typischerweise aus einem Stromnetz, wenigstens innerhalb des festgelegten Zeitbereiches um $P_i^+$ zu erhöhen oder um $P_i^-$ zu verringern. Die Rechenzentren können somit eine bestimmte, für den Zeitbereich festgelegte Flexibilität bereitstellen.

Hierbei können die bereitstellbare Flexibilität, das heißt die Leistungen $P_i^+, P_i^-$ von Zeitbereich zu Zeitbereich variieren, das heißt zeitabhängig sein.

In einem ersten Schritt des erfindungsgemäßen Verfahrens übermittelt jedes der Rechenzentren für den genannten Zeitbereich mit den jeweiligen Flexibilitätsleistungen $P_i^+, P_i^-$ assoziierte maximale Flexibilitätsleistungen $P_i^{+,\max}, P_i^{-,\max}$ an die Steuervorrichtung.

Dadurch ist die Steuervorrichtung sinnbildlich in Kenntnis darüber, welche Flexibilität welches Rechenzentrum innerhalb des betrachteten Zeitbereiches maximal bereitstellen kann. Das ist technisch erforderlich, da damit die Optimierung den tatsächlich technisch vorhandenen Flexibilitätsbereich des jeweiligen Rechenzentrums respektiert, das heißt nicht verletzt.

In einem zweiten Schritt des Verfahrens wird eine Zielfunktion, die die Flexibilitätsleistung $P_i^+$, $P_i^-$ als Variablen umfasst, bereitgestellt.

Hierbei modelliert die Zielfunktion eine Eigenschaft, insbesondere eine technische Eigenschaft, des Gesamtsystems, die im Betrieb der Rechenzentren optimiert werden soll. Insbesondere kennzeichnet und modelliert die Zielfunktion die Gesamtkohlenstoffemissionen der Rechenzentren. Durch die vorliegende Erfindung wird es somit möglich, Leistungen beziehungsweise Rechenarbeiten beziehungsweise Jobs zwischen den Rechenzentren innerhalb ihrer jeweiligen Flexibilität derart zu verschieben oder zu verteilen, dass beispielsweise eine möglichste minimale Gesamtkohlenstoffemission erreicht wird.

Gemäß einem dritten Schritt des Verfahrens werden die Werte der Flexibilitätsleistungen $P_i^+, P_i^-$ mittels einem Extremalisieren der Zielfunktion durch die Steuervorrichtung ermittelt.

Mit anderen Worten wird gemäß dem dritten Schritt die Optimierung durch die Steuervorrichtung durchgeführt. Dadurch sind die Flexibilitätsleistungen $P_i^+, P_i^-$ für den Zeitbereich bestimmt und diese können als Sollwerte für eine entsprechende Steuerung der Rechenzentren verwendet werden.

Bei der Optimierung wird erfindungsgemäß die erste Nebenbedingung berücksichtigt, dass die Summe aus einem der Rechenzentren zugeführten $P_{n \to i}$ und abgeführten Leistungen $P_{i \to j}$ entweder gleich $P_i^+$ oder gleich $-P_i^-$ ist. Hierbei ist $P_i^+ \leq P_i^{+,\max}$ und $-P_i^- \geq -P_i^{-,\max}$ beziehungsweise äquivalent $P_i^- \leq P_i^{-,\max}$.

Dadurch wird vorteilhafterweise sichergestellt, dass die technischen Randbedingungen des jeweiligen Rechenzentrums durch die Optimierung und somit durch die ermittelten Flexibilitätsleistungen $P_i^+, P_i^-$ respektiert werden.

Mit anderen Worten kann ein Rechenzentrum entweder eine positive Flexibilitätsleistung $P_i^+$ oder eine negative Flexibilitätsleistung $P_i^-$ bereitstellen, das heißt entweder seine Leistung um $P_i^+$ erhöhen oder um $P_i^-$ verringern und dies im Rahmen seiner jeweiligen Flexibilitätsgrenzen $P_i^{+,\max}, P_i^{-,\max}$. Hierbei sind erfindungsgemäß für die Erhöhung $P_i^+$ und die Verringerung $P_i^-$ verschiedene Grenzleistungen, nämlich $P_i^{+,\max}$ beziehungsweise $P_i^{-,\max}$, vorgesehen und berücksichtigbar. Die Flexibilitätsgrenzen $P_i^{+,\max}, P_i^{-,\max}$ können jedoch auch gleich sein.

Weiterhin stellt die genannte erste Nebenbedingung sicher, dass die Flexibilitätsleistung der Bilanz aus dem jeweiligen Rechenzentrum zugeführter und abgeführter Leistung entspricht. Dies entspricht ebenfalls einer technischen beziehungsweise einer physikalischen Anforderung.

In einem vierten Schritt des Verfahrens werden die Leistungstransfers zwischen den Rechenzentren gemäß der ermittelten Flexibilitätsleistungen $P_i^+, P_i^-$ mittels der Steuervorrichtung gesteuert.

Mit anderen Worten werden die berechneten beziehungsweise ermittelten Erhöhungen oder Verringerungen der Leistung für das jeweilige Rechenzentrum innerhalb des Zeitbereichs durchgeführt. Hierbei umfasst eine Steuerung durch die Steuervorrichtung eine mittelbare und unmittelbare Steuerung der Leistungsaufnahme der Rechenzentren. Liegt eine mittelbare Steuerung vor, so übermittelt die Steuervorrichtung beispielsweise die ermittelten Sollwerte für die Flexibilitätsleistungen an eine lokale Steuereinheit des Rechenzentrums, die dann die Steuerung/Regelung entsprechend ausführt.

Durch die Bereitstellung von Flexibilität können die Rechenzentren somit gemäß der vorliegenden Erfindung dazu beitragen, das Stromangebot und die Stromnachfrage im Stromnetz auszugleichen und den Bedarf an konventionellen Energiequellen zu verringern. Ein Grundgedanke der vorliegenden Erfindung ist es hierbei, nicht nur die Flexibilität der Rechenzentren zu nutzen, sondern ebenfalls diese Flexibilität bestmöglich (Optimierung) zwischen den Rechenzentren zu verteilen.

Durch die vorliegende Erfindung ergibt sich somit ein reduzierter Bedarf an kostspieligen und nicht nachhaltigen Netzausbaumaßnahmen, da die Nutzung bereits vorhandener Flexibilität verbessert wird.

Weiterhin ergibt sich ein reduzierter Bedarf an Regelleistung, die von konventionellen, auf fossilen Brennstoffen basierenden Kraftwerken bereitgestellt wird.

Die erfindungsgemäße Steuervorrichtung ist dadurch gekennzeichnet, dass diese ausgebildet ist, ein Verfahren gemäß der vorliegenden Erfindung und/oder einer ihrer Ausgestaltungen durchzuführen.

Es ergeben sich zum erfindungsgemäßen Verfahren gleichartige, gleichwertige und gleichwirkende Vorteile und/oder Ausgestaltungen der erfindungsgemäßen Steuervorrichtung.

Das erfindungsgemäße Rechenzentrensystem umfasst mehrere Rechenzentren und eine Steuervorrichtung. Das erfindungsgemäße Rechenzentrensystem ist dadurch gekennzeichnet, dass die Steuervorrichtung als erfindungsgemäße Steuervorrichtung ausgebildet ist.

Es ergeben sich zum erfindungsgemäßen Verfahren und/oder zur erfindungsgemäßen Steuervorrichtung gleichartige, gleichwertige und gleichwirkende Vorteile und/oder Ausgestaltungen des erfindungsgemäßen Rechenzentrensystems.

Gemäß einer vorteilhaften Ausgestaltung der Erfindung werden die weiteren, zweiten Nebenbedingungen

$$0 \le P_i^+ \le b_i^+ \cdot P_i^{+,\max}, \quad 0 \le P_i^- \le b_i^- \cdot P_i^{-,\max}$$ mit $b_i^+ + b_i^- \le 1$ beim Extremalisieren berücksichtigt, wobei $b_i^+, b_i^-$ Binärvariablen sind.

Die Binärvariable $b_i^+, b_i^-$ nehmen somit beispielsweise lediglich die Werte 0 und 1 an. Durch die genannten Nebenbedingungen wird in einer vorteilhaften Weise sichergestellt, dass nur eine der Flexibilitätsleistungen einen Wert ungleich Null aufweist. Mit anderen Worten wird dadurch zumindest gemäß einer möglichen vorteilhafte Ausgestaltung sichergestellt, dass die Leistung jedes Rechenzentrums technisch entweder erhöht oder verringert wird. Ein zeitgleiches Erhöhen und Verringern ist technisch unmöglich. Diese technische Anforderung wird durch die zweiten Nebenbedingungen mathematisch modelliert. Da die zweiten Nebenbedingungen beim Optimierungsverfahren verwendet beziehungsweise berücksichtigt werden, respektiert das Optimierungsergebnis, das heißt die Flexibilitätsleistungen, ebenfalls die genannte technische Anforderung.

In einer vorteilhaften Weiterbildung der Erfindung wird die weitere Nebenbedingung $\sum_i P_i^+ = \sum_i P_i^-$ beim Extremalisieren berücksichtigt.

Dadurch ist vorteilhafterweise sichergestellt, dass die Gesamtleistung des Gesamtsystems (Rechenzentrensystem) erhalten bleibt und somit die Leistung, wie vorgesehen, lediglich zwischen den Rechenzentren verschoben beziehungsweise ausgetauscht wird. Hierbei wird die zusätzliche Leistung, die für das Verschieben der Rechenaufgaben (Jobs) zwischen den Rechenzentren erforderlich sein mag, näherungsweise vernachlässigt.

Gemäß einer vorteilhaften Ausgestaltung der Erfindung wird die erste Nebenbedingung durch

$$P_i^+ - P_i^- = \sum_{n \in I \setminus \{i\}} P_{n \to i} - \sum_{j \in I \setminus \{i\}} P_{i \to j}$$

modelliert.

Mit anderen Worten ist die Summe der in das j-te Rechenzentren eingehenden Leistungen $\Sigma_{n \in I \setminus \{i\}} P_{n \to i}$ und der aus dem *i*-ten Rechenzentren ausgehenden Leistungen $-\Sigma_{j \in I \setminus \{i\}} P_{i \to j}$ entweder gleich $P_i^+$ oder gleich $-P_i^-$, da lediglich eine der Flexibilitätsleistungen einen Wert ungleich Null aufweist. Dies gilt für alle *i* = 1, ... . *N*.

In einer besonders vorteilhaften Weiterbildung der Erfindung wird die weitere Nebenbedingung $P_{i \to j} \leq P_{i \to j}^{\max}$ beim Extremalisieren berücksichtigt.

Mit anderen Worten ist ein Grenzwert $P_{i \to j}^{\max}$ für die austauschbare Leistung $P_{i \to j}$ vorgesehen. Dadurch kann beispielsweise sichergestellt werden, dass lokale Regularien bezüglich dem Austausch von Rechenaufgaben (Jobs) eingehalten werden. Das ist beispielsweise dann vorteilhaft, wenn bestimmte Daten innerhalb eines bestimmten Landes verbleiben müssen.

Gemäß einer vorteilhaften Ausgestaltung der Erfindung wird $\sum_i [c_i^+ \cdot P_i^+ + c_i^- \cdot P_i^-]$ als Zielfunktion ver-wendet, wobei $c_i^+, c_i^-$ festgelegte Parameter sind.

Dadurch ist die Zielfunktion vorteilhafterweise linear in den Flexibilitätsleistungen. Vorteilhafterweise kann dadurch die Rechenzeit für die Optimierung verkürzt werden, sodass ebenfalls eine Echtzeitanwendung, beispielsweise eine Optimierung alle 15 Minuten, durchgeführt werden kann.

In einer vorteilhaften Weiterbildung der Erfindung sind die Parameter $c_i^+, c_i^-$ als spezifische Kohlenstoffdioxidemissionen ausgebildet.

Mit anderen Worten quantifiziert beziehungsweise modelliert die Zielfunktion dadurch die Gesamtkohlenstoffdioxidemissionen des Gesamtsystems (Rechenzentrensystem). Durch das Minimieren der Zielfunktion werden somit die Gesamtkohlenstoffdioxidemissionen minimiert. Mit anderen Worten werden dadurch die Rechenaufgaben beziehungsweise die Leistungen zwischen den Rechenzentren im Rahmen der möglichen Flexibilitäten derart aufgeteilt beziehungsweise ausgetauscht, dass möglichst minimale Kohlenstoffdioxidemissionen erreicht werden. Die Parameter $c_i^+, c_i^-$ weisen beispielsweise die Einheit Gramm $CO_2$ pro Kilowattstunde oder Tonnen $CO_2$ pro Megawattstunde auf.

Gemäß einer vorteilhaften Ausgestaltung ist der Zeitbereich 15 Minuten lang.

Dadurch ist vorteilhafterweise eine quasi Echtzeitbereitstellung der Flexibilität für das Stromnetz möglich.

In einer vorteilhaften Weiterbildung wird für mehrere aufeinander folgende Zeitbereiche beziehungsweise Zeitintervalle das Verfahren gemäß der vorliegenden Erfindung und/oder einer ihrer Ausgestaltungen wiederholt durchgeführt.

Besonders bevorzugt wird das Verfahren gemäß der vorliegenden Erfindung und/oder einer ihrer Ausgestaltungen alle 15 Minuten wiederholt durchgeführt.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

Figur 1     ein Ablaufdiagramm einer Ausgestaltungen der Erfindung; und

Figur 2    ein Rechenzentrensystem gemäß einer Ausgestaltung der Erfindung.

Gleichartige, gleichwertige oder gleichwirkende Elemente können in einer der Figuren oder in den Figuren mit denselben Bezugszeichen versehen sein.

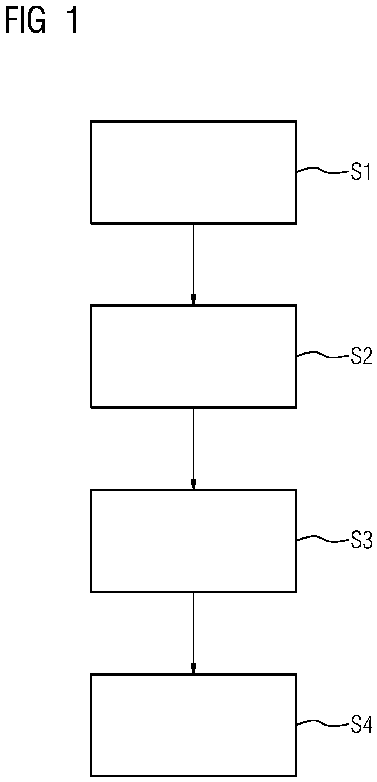

Die Figur 1 zeigt ein Ablaufdiagramm eines Verfahren zur Steuerung von Leistungstransfers zwischen mehreren Rechenzentren gemäß einer Ausgestaltung der Erfindung.

Der Leistungsaustausch beziehungsweise der Leistungstransfer beziehungsweise der Energieaustausch zwischen den mehreren Rechenzentren $i \in I$ erfolgt wenigstens innerhalb eines festgelegten Zeitbereiches. Hierbei ist beispielsweise $I = \{1,..,N\}$, das heißt, dass die Anzahl der Rechenzentren $N$ ist, wobei $N \geq 2$ ist. Die Leistungstransfers werden mittels einer Steuervorrichtung ermittelt und durchgeführt.

Weiterhin kann jedes Rechenzentrum innerhalb des genannten Zeitbereichs, beispielsweise innerhalb kommender 15 Minuten, seine Leistung um die Flexibilitätsleistung $P_i^+$ erhöhen oder um die Flexibilitätsleistung $P_i^-$ verringern. Dadurch kann für das Stromnetz grundsätzlich eine Flexibilität bereitgestellt werden.

Gemäß einem ersten Schritt S1 des Verfahrens übermittelt jedes der Rechenzentren mit den jeweiligen Flexibilitätsleistungen assoziierte maximale Flexibilitätsleistungen $P_i^{+,\max}, P_i^{-,\max}$ an die Steuervorrichtung.

Mit anderen Worten kann das $i$-te Rechenzentrum seine Leistung maximal um $P_i^{+,\max}$ erhöhen oder maximal um $P_i^{-,\max}$ verringern. Dadurch ist der maximale Flexibilitätsbereich jedes Rechenzentrums der Steuervorrichtung sinnbildlich bekannt. Hierbei sind die maximalen Flexibilitätsleistungen vom Rechenzentrum und vom betrachteten Zeitbereich abhängig. Mit anderen Worten sind die maximalen Flexibilitätsleistungen rechenzentrumsspezifisch und gegebenenfalls zeitabhängig.

In einem zweiten Schritt S2 des Verfahrens wird eine Zielfunktion, die die Flexibilitätsleistung $P_i^+, P_i^-$ als Variablen umfasst, bereitgestellt.

Insbesondere wird die Zielfunktion durch $\sum_i [c_i^+ \cdot P_i^+ + c_i^- \cdot P_i^-]$ ausgebildet, wobei $c_i^+, c_i^-$ festgelegte Parameter sind, die insbesondere spezifische Kohlenstoffdioxidemissionen sind. Die Parameter $c_i^+, c_i^-$ sind innerhalb des Zeitbereichs konstant, können sich jedoch von Zeitbereich zu Zeitbereich ändern. Beispielsweise können die spezifischen Kohlenstoffdioxidemissionen von einem aktuellen Strommix abhängig sein, sodass die Parameter $c_i^+, c_i^-$ ebenfalls zeitabhängig sind.

Gemäß einem dritten Schritt S3 des Verfahrens werden Werte der Flexibilitätsleistungen $P_i^+, P_i^-$ mittels einem Extremalisieren der Zielfunktion durch die Steuervorrichtung ermittelt beziehungsweise berechnet. Hierbei wird beim Extremalisieren die erste Nebenbedingung berücksichtigt, dass die Summe aus einem der Rechenzentren zugeführten $P_{n \to i}$ und abgeführten Leistungen $P_{i \to j}$ entweder gleich $P_i^+ \leq P_i^{+,\max}$ oder gleich $-P_i^- \geq -P_i^{-,\max}$ ist.

Durch das Extremalisieren, das heißt durch ein Minimieren oder Maximieren der Zielfunktion, werden die Flexibilitätsleistungen $P_i^+, P_i^-$ in ihren Werten für den genannten Zeitbereich festgelegt. Die dadurch berechneten Werte der Flexibilitätsleistungen $P_i^+, P_i^-$ liegen der Steuerung der Leistungstransfer zugrunde und können beispielsweise als Sollwerte für eine Steuerung/Regelung der Rechenzentren verwendet werden.

In einem vierten Schritt S4 des Verfahrens werden somit die Leistungstransfers zwischen den Rechenzentren gemäß der ermittelten Flexibilitätsleistungen $P_i^+, P_i^-$ mittels der Steuervorrichtung gesteuert.

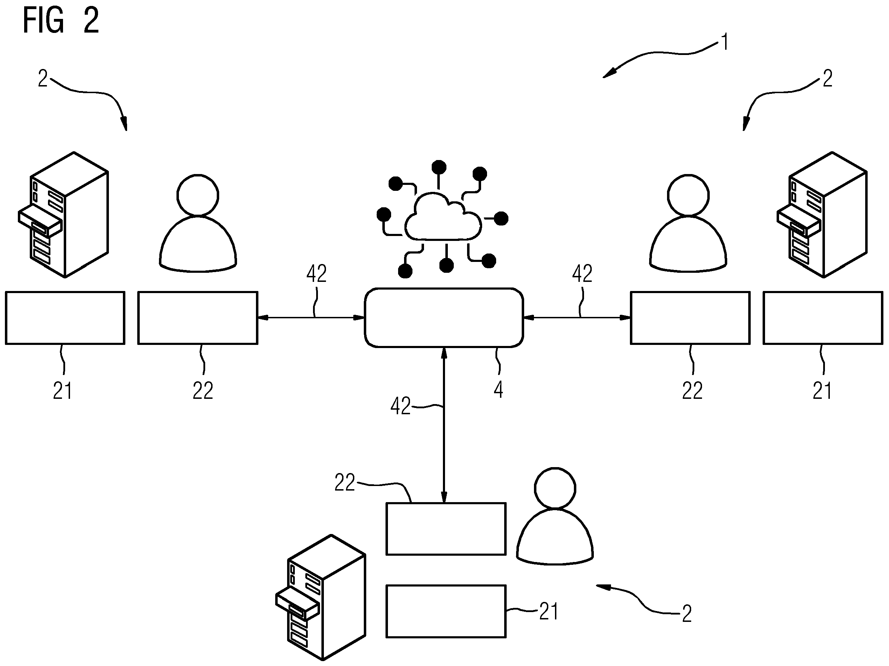

Die Figur 2 zeigt ein Rechenzentrensystem 1 gemäß einer Ausgestaltung der Erfindung.

Hierbei zeigt die Figur 2 mehrere Rechenzentren 2 und eine bezüglich der Rechenzentren 2 zentrale Steuervorrichtung 4. Die Steuervorrichtung 4 ist vorliegend cloudbasiert und beispielsweise als Server ausgebildet.

Jedes der Rechenzentren 2 umfasst wenigstens eine Recheneinheit 21 und eine Steuereinheit 22. Hierbei führt die jeweilige Recheneinheit die Rechenaufgaben (Jobs) des jeweiligen Rechenzentrums 2 aus. Die jeweiligen Steuereinheiten 22 steuern oder regeln die jeweils zughörige Recheneinheiten 21. Weiterhin sind die Steuereinheiten 22 zur Datenübermittlung mit der zentralen Steuervorrichtung 4 ausgebildet. Hierbei übermitteln die Steuereinheiten (Agenten) 22 die jeweiligen maximalen Flexibilitätsleistungen an die Steuervorrichtung 4. Weitere Daten/Informationen können übermittelt werden.

Die Steuervorrichtung 4 ermittelt basierend auf den übermittelten Daten/Informationen gemäß dem erfindungsgemäßen Verfahren und/oder einem seiner Ausgestaltungen die jeweiligen Flexibilitätsleistungen. Diese werden dann durch die Steuervorrichtungen an das jeweiligen Rechenzentrum 2 beziehungsweise an die jeweilige Steuereinheit 22 des jeweiligen Rechenzentrums 2 übermittelt. Die lokalen Steuereinheiten 22 erhöhen oder verringern entsprechend den berechneten und übermittelten Flexibilitätsleistungen dann die jeweiligen Leistungsaufnahmen der Rechenzentren 2. Dies kann für mehrere Zeitbereiche, insbesondere alle 15 Minuten, wiederholt werden.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

S1    erster Schritt
S2    zweiter Schritt
S3    dritter Schritt
S4    vierter Schritt

1    Rechenzentrensystem
2    Rechenzentrum
4    Steuervorrichtung
21    Recheneinheiten
22    Steuereinheiten

**Patentansprüche**

1. Verfahren zur Steuerung von Leistungstransfers (42) zwischen mehreren Rechenzentren $i \in I$ (2) innerhalb eines festgelegten Zeitbereiches mittels einer Steuervorrichtung (4), wobei jedes der Rechenzentren (2) seine Leistungsaufnahme in dem Zeitbereich um eine Flexibilitätsleistung $P_i^+$ erhöhen oder $P_i^-$ verringern kann, **gekennzeichnet durch** folgende Schritte:

- (S1) Übermitteln von mit den jeweiligen Flexibilitätsleistungen assoziierte maximale Flexibilitätsleistungen $P_i^{+,\max}, P_i^{-,\max}$ an die Steuervorrichtung (4) durch jedes der Rechenzentren (2) für den genannten Zeitbereich;

- (S2) Bereitstellen einer Zielfunktion, die die Flexibilitätsleistung $P_i^+, P_i^-$ als Variablen umfasst;

- (S3) Ermitteln der Werte der Flexibilitätsleistungen $P_i^+, P_i^-$ mittels einem Extremalisieren der Zielfunktion durch die Steuervorrichtung (4); wobei
- beim Extremalisieren die erste Nebenbedingung berücksichtigt wird, dass die Summe aus einem der Rechenzentren (2) zugeführten $P_{n \to i}$ und abgeführten Leistungen $P_{i \to j}$ entweder gleich $P_i^+ \leq P_i^{+,\max}$ oder gleich $-P_i^- \geq -P_i^{-,\max}$ ist; und

- (S4) Steuern der Leistungstransfers zwischen den Rechenzentren (2) gemäß der ermittelten Flexibilitätsleistungen $P_i^+, P_i^-$ mittels der Steuervorrichtung (4).

2. Verfahren gemäß Anspruch 1, **gekennzeichnet dadurch, dass** die weiteren Nebenbedingungen

$$0 \leq P_i^+ \leq b_i^+ \cdot P_i^{+,\max}, \; 0 \leq P_i^- \leq b_i^- \cdot P_i^{-,\max}$$ mit $b_i^+ + b_i^- \leq 1$ beim Extremalisieren berücksichtigt werden, wobei $b_i^+, b_i^-$ Binärvariablen sind.

3. Verfahren gemäß Anspruch 1 oder 2, **gekennzeichnet dadurch, dass** die weitere Nebenbedingung $\sum_i P_i^+ = \sum_i P_i^-$ beim Extremalisieren berücksichtigt wird.

4. Verfahren gemäß einem der vorhergehenden Ansprüche, **gekennzeichnet dadurch, dass** die erste Nebenbedingung durch

$$P_i^+ - P_i^- = \sum_{n \in I \setminus \{i\}} P_{n \to i} - \sum_{j \in I \setminus \{i\}} P_{i \to j}$$

modelliert wird.

5. Verfahren gemäß Anspruch 4, **gekennzeichnet dadurch, dass** als weitere Nebenbedingung $P_{i \to j} \leq P_{i \to j}^{\max}$ beim Extremalisieren berücksichtigt wird.

6. Verfahren gemäß einem der vorhergehenden Ansprüche, **gekennzeichnet dadurch, dass** als $\sum_i [c_i^+ \cdot P_i^+ + c_i^- \cdot P_i^-]$ als Zielfunktion verwendet wird, wobei $c_i^+, c_i^-$ festgelegte Parameter sind.

7. Verfahren gemäß Anspruch 6, **gekennzeichnet dadurch, dass** die Parameter $c_i^+, c_i^-$ als spezifische Kohlenstoffdioxidemissionen ausgebildet sind.

8. Verfahren gemäß einem der vorhergehenden Ansprüche, **gekennzeichnet dadurch, dass** der Zeitbereich 15 Minuten lang ist.

9. Verfahren gemäß einem der vorhergehenden Ansprüche, **gekennzeichnet dadurch, dass** dieses für mehrere aufeinander folgende Zeiterbeiche wiederholt durchgeführt wird.

10. Steuervorrichtung (2), **dadurch gekennzeichnet, dass** diese ausgebildet ist, ein Verfahren gemäß einem der vorhergehenden Ansprüche durchzuführen.

11. Rechenzentrensystem (1) umfassend mehrere Rechenzentren (2) und eine Steuervorrichtung (4), **dadurch gekennzeichnet, dass** die Steuervorrichtung (2) gemäß Anspruch 10 ausgebildet ist.

FIG 1

FIG 2

EP 4 610 778 A1

Europäisches
Patentamt

European
Patent Office

Office européen
des brevets

## EUROPÄISCHER RECHERCHENBERICHT

Nummer der Anmeldung

EP 24 16 0531

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2021 214816 A1 (SIEMENS AG [DE]) 25. Mai 2023 (2023-05-25) * Absätze [0016], [0048] * * Absatz [0060] - Absatz [0077]; Ansprüche 1,13; Abbildung 1 * ----- | 1-11 | INV. G06F1/26 G06F9/50 |
| A | EP 3 767 770 A1 (SIEMENS AG [DE]) 20. Januar 2021 (2021-01-20) * Absatz [0009] - Absatz [0032] * * Absatz [0042] - Absatz [0051]; Abbildungen 1,2 * ----- | 1-11 | |

RECHERCHIERTE SACHGEBIETE (IPC)

H02J
G06F

Der vorliegende Recherchenbericht wurde für alle Patentansprüche erstellt

| Recherchenort | Abschlußdatum der Recherche | Prüfer |
|---|---|---|
| Den Haag | 19. Juli 2024 | Schröter, Marcel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 0531

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-07-2024

| Im Recherchenbericht angeführtes Patentdokument | Datum der Veröffentlichung | Mitglied(er) der Patentfamilie | Datum der Veröffentlichung |
|---|---|---|---|
| DE 102021214816 A1 | 25-05-2023 | KEINE | |
| EP 3767770 A1 | 20-01-2021 | KEINE | |

Für nähere Einzelheiten zu diesem Anhang : siehe Amtsblatt des Europäischen Patentamts, Nr.12/82

EPO FORM P0461